(19) **Europäisches Patentamt / European Patent Office / Office européen des brevets**

(11) **EP 2 597 758 B1**

(12) **EUROPEAN PATENT SPECIFICATION**

(45) Date of publication and mention
of the grant of the patent:
**24.07.2019 Bulletin 2019/30**

(51) Int Cl.:
*H02K 3/493* (2006.01)     *H02K 1/27* (2006.01)
*H02K 21/00* (2006.01)     *H02K 1/16* (2006.01)

(21) Application number: **12007757.3**

(22) Date of filing: **16.11.2012**

(54) **PM brushless motor with control of inductance**

Bürstenloser Permanentmagnetmotor mit Steuerung der Induktivität

Moteur sans balais à PM avec commande d'inductance

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2011 IT MI20112143**

(43) Date of publication of application:
**29.05.2013 Bulletin 2013/22**

(73) Proprietor: **Phase Motion Control S.p.A.**
**16154 Genova (IT)**

(72) Inventor: **Venturini, Marco**
**16145 Genova (GE) (IT)**

(74) Representative: **Bergadano, Mirko**
**Studio Torta S.p.A.**
**Via Viotti, 9**
**10121 Torino (IT)**

(56) References cited:
**DE-A1- 3 326 396     JP-A- 58 019 138
JP-A- 61 177 143     US-A- 5 793 178
US-B2- 7 436 098**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to improvements in permanent magnets brushless motor and particularly to PM (permanent magnets) motors of high performances, capable of operating at a constant power over an extended speed range.

More precisely the invention refers to a high performance PM motor with controlled low losses inductance.

In the following the invention will be illustrated with reference to permanent-magnets brushless motors with Surface Mounted Magnets.

In the first place it is to be pointed out the difference between electric motors in which the stator windings are lodged in "open" slots (i.e. slots having a substantially constant width along a radial direction), and motors in which the windings are lodged in so-called "closed" or better "partially closed" slots in which the width of the radially inner part of the slot is smaller than that of the remaining slot. As it is known, in motors with power in excess of a few hundreds kW, the stator winding coils - usually rigid - are assembled and insulated apart, and are then inserted into "open slots ", while in high speed and smaller size motors, with slots that are (partially) closed, the coils of the windings are squeezed inside the slots through the slot openings.

It is a problem known from decades that the opening in the slots cause an irregularity of the magnetic field developing in air, in correspondence of the openings of the slots.

In large size motors the relatively large thickness of the conductors dictates large slot openings and the associated field distorsions become unacceptable. From decades there have been used closing wedges (of a ferromagnetic material) to close the slots after the windings have been inserted, as shown for example in JP 61 177143, DE 20 15 978, JP 58 019138.

In some cases such ferromagnetic wedges have also been used to increase the leakage or series inductance of the motor with the purpose of reducing the current ripple when using converters to feed the motor. In all these cases the desired inductance value per unit is rather small and the motor current in the stator windings capable to saturate such wedges is a fraction of the nominal current of the machine. DE 33 26 396 discloses how to modify the leakage inductance merely to reduce the current ripple when the motor is fed through a converter with a low PWM frequency, and an inductance change for this limited purpose can be easily achieved. US 7 436 098 B2 discloses means for limiting maximum current conducted through windings of an electric machine having a rotor and a stator. By encouraging an appropriate leakage flux around a winding, a leak impedance can be achieved which may be used to limit the maximum current in the winding as a matter of machine design. US 5 793 179 discloses a synchronous permanent-magnet electric motor and a vehicle driven by such a motor. The electric motor has a leakage inductance whose value is at least about 10% of the value of its effective inductance. In this way, the total inductance of the motor is maximized so as to optimize the effect of the variation of the phase of the stator current on the variation of the voltage at the terminals of the motor. Such an electric motor is notably applicable to an electric vehicle.

In relatively small electric machines (motors or generators), the size of the slot openings are such as not to create appreciable problems at the air gap and therefore those motors do not substantially require the use of closing wedges. Nevertheless when motors of this type are used with control electronics for achieving an operation with constant power and current over an extended range of speeds, it has recently been understood that it would be desirable that each stator winding has a particular value of inductance, the so-called "critical inductance." The technical aspects of such critical inductance are for example described in Jahns, T.M., "Component rating requirements for wide constant power operation of interior PM synchronous machine drives" Industry Applications Conference, 2000. Conference Record of the 2000 IEEEs, vol.3, no., pp.1697-1704 vol.3, 2000. The value of the critical inductance is notably greater of that of the winding natural inductance, and the problems in obtaining such inductance value proved very difficult to be solved, whereby it has been suggested to add an external inductance in series to each stator winding of the motor, so that the sum of the winding inductance and that of the additional inductor is equal to the critical inductance.

The critical value of inductance produces a voltage drop - at the nominal motor current - which is equal to the motor back EMF. So if we neglect the resistance which is small in a high efficiency motor, and we call $Ke$ = back EMF (volt/rad/sec), $Pn$ = number of motor poles, $In$= nominal motor current, $Lcr$= critical inductance, $w$ = motor speed, for the critical inductance holds the relation:

$$In * w * Pn / 2 * Lcr = Ke * w$$

And consequently

$$Lcr = Ke * 2 / (In * Pn)$$

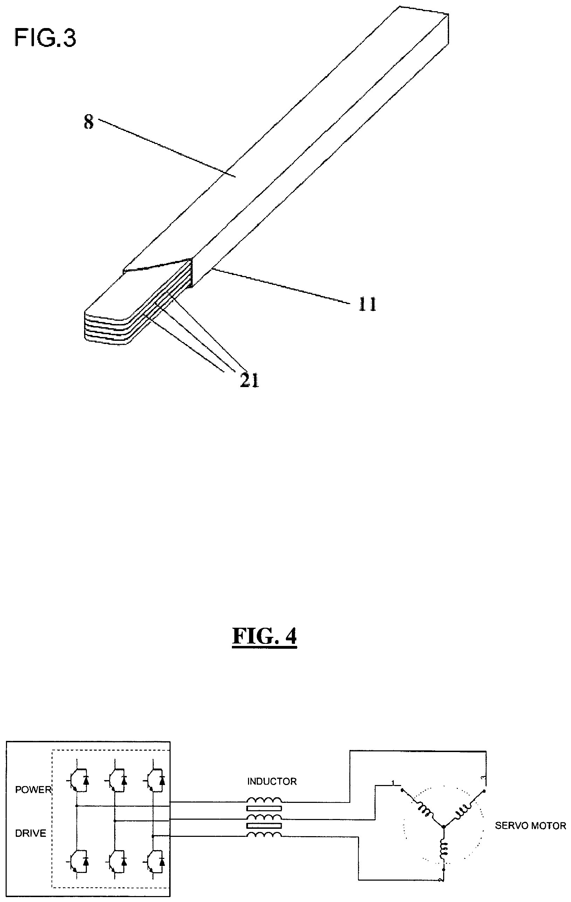

The known technique of using external inductances is shown in Fig. 4. More precisely - for each phase - an external inductor is connected in series to the PM motor winding, and the drive unit is programmed for supplying an in-quadrature current that is orthogonal to the counter EMF (generated by the rotating motor), so that the voltage drop across the external inductor is opposite to the counter EMF of the motor. Thanks to this trick, the voltage across the motor can raise above the driving voltage when the motor is rotating at high speed, while the driving voltage remains constant when the speed increases, and the excess voltage is balanced by the corresponding voltage drop across the inductor connected in series. This way, a PM motor can operate in a condition sometime called as "defluxed mode." The inductance value at which the motor EMF can be exactly compensated by the voltage drop across the inductance at any motor speeds in the assigned range (with the nominal current) is the already mentioned critical inductance value. This is a unique value since the impedance of an inductor linearly increases with the frequency, while also the motor counter EMF linearly increases with the speed of the motor. Therefore there is a fixed inductance value that can provide the right voltage drop at all speed.

It is known that permanent magnets brushless motors generate the highest currently available torque/size and power/size ratios.

A PM brushless motor can be built with different arrangements of the magnets but the surface mounted configuration - in which the magnets are directly located in the air gap facing the stator laminations - is generally preferred since it allows to achieve the highest power density with a very simple and light rotor, together with the possibility to receive a large size rotor.

In general, a PM brushless motor is a machine operating at a fixed, or almost constant, flux. The magnetic flux in the air gap is determined above all by the size and by the power of the employed magnets, and it is little influenced by the armature reaction or, in general, by the currents circulating in the stator coils. This implies that the counter EMF voltage induced within the motor is substantially proportional to the rotation speed of the motor, whereas the machine PU (For Unity) reactance is generally very low. The equivalent circuit of a surface mounted PM motor is approximately that of a voltage source delivering a voltage that is proportional to the motor speed.

Although the characteristic of proportionality between voltage and speed can be a useful one, for instance in the control of dynamic movements such as those of a robotized arm, it is nevertheless a serious limitation when the characteristics of the load require a constant power over an extended interval of speeds, such as in applications requiring low-speed high-torque and high-speed low-torque in vehicle traction or in mandrels of machine tools.

For a better understanding of this limitation, let's assume that a PM brushless motor has unitary efficiency and a series impedance that is null, and that a constant power load PL is required throughout a given speed range from n1 to n2, where the relationship n2/n1=k is defined as constant load power range (CLP). To meet such requisite, in view of the fixed proportionality between the motor voltage and the speed, the motor must be designed so that its counter voltage (EMF) is equal to the highest driving voltage available $V_{drive}$ at the maximum speed n2. As a result, at the lower end n1 of the CLP range, the motor voltage would be lower than the driving voltage and more precisely it would be equal to

$V_{drive}$ * n1/n2. In order to supply the requested constant power PL, the driver should be capable of providing a current = PL/($V_{drive}$ * sqrt(3)) in correspondence of the highest speed, as well as a current = PL/PL/($V_{drive}$ * n1/n2*sqrt(3)) at the lowest speed. Thus the requirements for the driving current result in being greater of a factor n2/n1 = k when compared with the current needed to drive the requested load power.

Applications in the traction field for vehicles dictate a value of k in the order of 4, and those in the field of machine tools are in the order of 10. Therefore the use of a surface mounted permanent magnets motor would result rather expensive for these applications, requiring a drive electronics that is approximately k times more powerful than that required for a motor in which the counter EMF could be controlled, as for example in separately excited motors or induction motors.

The above discussed use of an external calibrated inductor (for each phase) for high frequency in series with the motor, although advantageous, introduces nevertheless two main drawbacks.

At the terminals of the motor a considerable voltage is present, since the voltage is controlled only at the drive side and not at the motor side; this dictates elevated requirements for the insulation of the motor and brings about a concern for the operator's safety when the range of speed at constant power is such that the motor voltage in correspondence of the maximum speed is larger than 2,000 V. Moreover, an inductor in series is an intrinsically complex device, generally rather expensive and with appreciable power losses; and even the encumbrance requisites can create problems.

It is further to be considered that theoretically an increase of the motor leakage inductance could be realized by reducing the opening of the stator slots housing the windings, but since an opening of the slots is necessary to introduce the windings in the slots, the opening reduction of the slots required for realizing a critical inductance for an effective control over an extended flux range would be impracticable.

It is therefore an object of the present invention to overcome the above mentioned drawbacks of the prior art by providing a PM brushless motor, realizing a critical inductance of the stator windings, without using external inductive elements, so that the motor can operate at constant power over an assigned speed range.

This object is achieved through a PM brushless motor according to the invention as defined in the independent claim 1. Further developments of the present invention are recited in the dependent claims.

According to the present invention, in a general PM brushless motor, an additional electric impedance (or inductor) is integrated within the motor. This way, a motor according to the invention, besides maintaining all the desirable advantages of a PM motor with surface mounted magnets, allows for achieving a customized desired value of the stator parasitic inductance without creating appreciable additional losses.

The surface mounted magnets brushless motor according to the invention provides for an element capable of modifying the series (or parasitic) inductance of the motor at high frequency, with the design of such element being controllable and introducing low losses, such element being lodged inside each (partially closed) stator slot and being not substantially coupled with the magnetic flux in the circular air gap defined between rotor and stator.

Exemplary embodiments and advantages of the present invention are illustrated in the following with reference to the attached drawings that for clarity sake, are neither in scale nor in proportion.

In the drawings:

Fig. 1 is a schematic view illustrating a portion of the structure and the magnetic circuit of a three-phase brushless motor according to the invention;
Fig. 2 is an enlarged partial view of Fig. 1 illustrating an embodiment of the invention,
Fig. 3 illustrates a further embodiment of the invention; and
Fig. 4 illustrate an example of a prior art motor-drive arrangement with external inductive elements.

In all the drawings the same references have been used to indicate equal or functionally equivalent components.

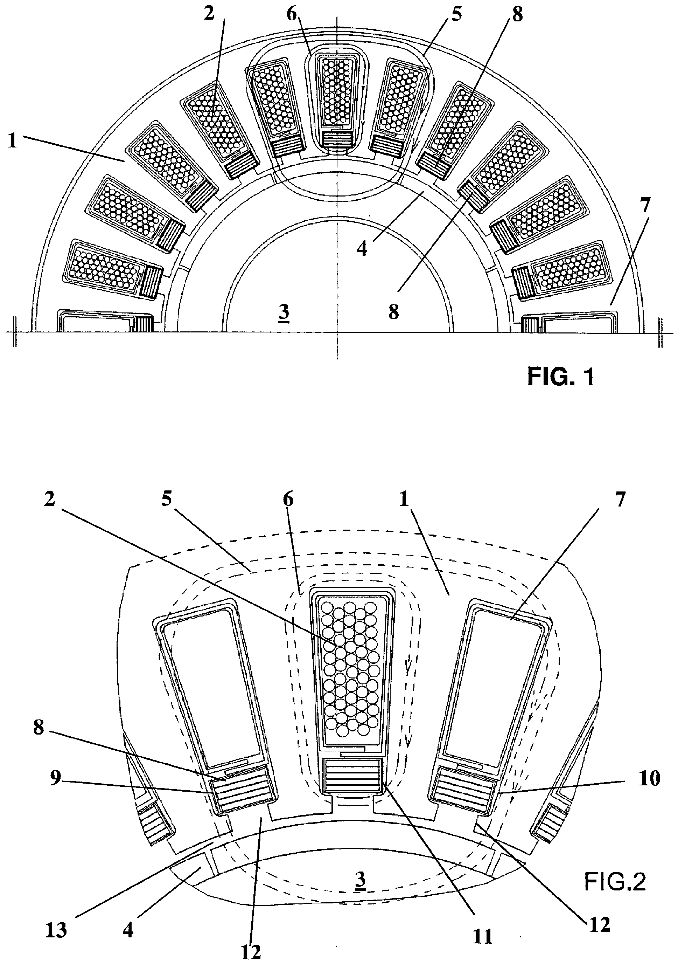

The invention will firstly be disclosed with reference to Figures 1 and 2, that show a PM brushless motor providing for surface mounted magnets 4. For simplicity sake the feeding converter comprising three-phase bridges and generating in a known way the currents feeding the stator windings is not illustrated.

In a conventional manner, the brushless motor of the invention includes a stator body 1, formed by a stack of armature laminations or sheets and provided with slots 7, with a plurality of windings 2 distributed in the slots 7 of the stator body, and a rotor 3 coaxially fitted inside the stator and carrying a plurality of permanent magnets 4 on the surface facing the circumferentially-extending radial air gap 13.

In a motor according to the invention, each slot 7 comprises a partial closing portion or bottleneck 12, having a width smaller than that of the remaining slot and located at a radially inner position and extending up to the circumferential air gap 13 defined between the stator 1 and the rotor 3.

According to the invention, after the windings 2 have been positioned in each slot 7, leaving a free space between them and the bottleneck 12, an element 8 capable to modify the parasitic inductance of the stator is inserted in such free space, so that it is located in a radially inner position with respect to said windings.

According to a preferred embodiment of the invention, such element 8 modifier of inductance includes a ferromagnetic elongated member or rod, extending as long as the armature stack of laminations of the motor and formed by a material with ferromagnetic properties, so as to create an additional path for the magnetic flux. The element 8 is further characterized by low specific losses at high frequency of the so formed core. In the meaning of the present invention, a "high frequency" is typically a frequency between 2kHz and 16 kHz of the PWM converter. Such element 8 further provides for an insulating wrapping 11 to insulate the element from the windings 2 of the lamination stack and also to act as a spacer as will be illustrated later.

By modifying the (radial) thickness and the (circumferential) width of the rod 8, the reluctance of the path 6 of lost flux shown in Fig. 1 can be adjusted at a desired value, that is the parasitic inductance of the motor can be fixed at a desired and critical value without affecting the magnets.

More precisely, the reluctance of the parasitic path so introduced in the magnetic circuit is determined in a precise way by the rod thickness and by the residual air gap on the rod sides, both these quantities being suitable to be controlled with great accuracy during the manufacture of the rods. Through a proper choice of these quantities there can be achieved a desired value of the parasitic inductance capable of compensating the counter EMF with a proper reactive voltage drop of the motor, through a compatible current value, i.e. a current that is lower than the nominal current of the motor.

In this way, in a motor according to the invention the reluctance of the parasitic path can be strongly decreased and, most important, in a controllable manner and with low losses through a proper choice of the size and the material of the rods.

The element 8 form a sort of bridge to the parasitic field with an impedance that is adapted to allow a control of a constant power over an extended speed range, without appreciably increasing the losses in the motor.

For a better appreciation of the invention, it is pointed out that, as a general rule, the parasitic inductance of a polyphase stator is determined by the magnetic reluctance of the paths of magnetic field coupled to a same winding. To a first approximation these paths can be divided into paths of armature reaction, indicated by the reference 5 in Fig. 1, in which the field induced by the armature coil is coupled with the magnets and is potentially capable of causing a demagnetization, and the paths of the leakage flux 6, that represent paths (of the magnetic field) that are coupled with the armature coils 2, but not with the facing magnets 4.

In theory, this reduction could simply be achieved by reducing the opening of the slots 7 housing the windings, but such openings are necessary to insert the windings in the slots and a reduction of the slot opening to the value necessary such as to reach the critical inductance required by the flux control over a extended range is simply not possible.

According to the preferred embodiment of the invention shown in Fig. 3, the rod 8 include a stack of very thin silicon steel laminations 21, which are joined together through connection (interlocking), gluing or clinching to form a substantially parallelepiped element with the stacked laminations parallel to the air gap. The thickness of the laminations is in the order of 0.2 or 0.35 mms, that is a thickness similar in that the of low loss laminations normally used for manufacturing the motor armature or laminated inductors.

The use of laminations similar to the construction of the remaining stator configuration, minimizes the losses due to leak currents, thus achieving the other object of the invention i.e. a low loss inductance. The invention arrangement only apparently and graphically resembles that of several ferromagnetic wedges employed for years to close the open stator slots as in the above discussed documents, but the present invention differs for the following reasons.

The ferromagnetic wedges used for closing the prior art slots aims to make uniform the profile of the rotating field existing in the air gap and as a consequence their form is selected so as to be mounted (fitted) as much as possible in proximity of the air gap; whereas on the contrary the rods of the invention contain a magnetic field that does not have to be coupled with the rotor and therefore are located in a more radially outer position with respect to the slot closures or bottlenecks. Moreover, said mentioned wedges do not aim to calibrate the inductance (i.e. to reach a preset inductance value) and therefore are not sized to convey the flux in-quadrature of the driving unit, but only the magnetic flux fraction corresponding to the field distorsion in the air gap caused by the opening in the slot; the prior art wedge therefore are quite thinner than the rod of the present invention since this latter is used for conveying a smaller and different magnetic flux.

Finally, for the above reasons, the ferromagnetic slots of the invention do not couple significant voltages and therefore they do not require an appreciable insulation; while the rods that are developed for building an inductance inside the motor, in the case of operation with flux control, are subject to a flux magnetic correspondent to a voltage drop equal to several times the operational voltage of the motor and therefore they require a significant level of insulation.

In respect of the above, let's consider the following Example.

Example

As an example, consider the design of a spindle motor for a machine tool which requires a low speed torque, continuous duty, of about 1800 Nm up to 800 rpm , then a constant power, about 140 kW, up to 6000 rpm.

With surface mounted, high energy rare earth permanent magnets, it is possible to realize a motor with the required low speed torque with a stator core having an outer diameter of only 338 mm and a stack length of 380 mm. The reference design has 16 rotor poles realized with high energy FeNdB magnets with remanence flux density Br equal to 1.25 Tesla. The stator has 72 slots which have an opening of just 1.5 mm, barely sufficient for the coil wire to be fed through the opening. However, even with this very narrow slot opening, the stator self inductance is only 1.4 mH between phases, short of the 2.5 mH which are the critical inductance for this motor pole number and nominal current. Operation of this motor over the required speed range would thus need a series inductor with 3 x .55 mH, and considering that the motor back EMF must equal the power supply voltage at 1000 rpm, this means that the voltage on the motor terminals would be (at the maximum speed of 6000 rpm, equal and in the case of a standard 400 V design) equal to 400x6000rpm/1000rpm=2400 Vac, clearly difficult to be operated safely.

Such difficulty normally leads to the abandoning of the powerful surface magnet design in favour of submerged magnets or induction motor technologies, both resulting in a much bigger and less efficient motor. According to the present invention, a rod made of 10 layers of .2 mm laminations, with a total thickness of 2 mm, with a 2x0.25 mm spacer/insulation wrapped around it, would create inside the machine an additional inductance of just exactly the required .55 mH per phase, thus realizing a motor that can fully satisfy the specification.

It must also be considered that high power density and high speed motors have a low number of turns in the coils, and therefore the voltage applied to the rod becomes important since the rod can be considered as a half turn coupled to the coil in the slot. To illustrate such a requirement, consider the reference design above. The motor has just 1.5 turns/coil, 2 coils/slot, 72 slots so there are 1.5x72*2/3 = 72 turns in series. The voltage across the coil, with the standard Pulse Width Modulation drive, is, on average, sinusoidal but it is obtained by switching at a frequency between 2 kHz and 16 kHz, with appropriate duty cycle, the motor terminal between the positive and negative polarity of the drive DC Bus, is typically around 650 V. The voltage coupled across the bar is therefore 650 V/ 72*.5 = 4.5 Volt, a voltage that would circulate an important current if a proper bar insulation were not applied.

With reference to Fig. 3 the stack of the laminations is covered by an insulating wrapping 11 to insulate the windings 2 from the lamination stack and also to act as a spacer. The width of the rod positioned in the slot parallelly to the air gap is chosen so as to leave only the lateral spaces at the side air gap (9, 10 in Fig. 2) so that the reluctance of the resulting path is the one that would determine the specified leakage inductance, whereas the thickness of the lamination stack is adjusted to avoid saturation at the maximum armature current. The stacked element 8 for modifying the motor inductance can be fitted into the slots on top of the existing winding insulation, or can be inserted into the slots as an already insulated body. The insulation wrapping 11 can be formed through fluid bed covering, or lacquering, or by inserting the stacklet in a tubular heath-shrinkable element of a proper thickness, or by wrapping the stacklet into an appropriate number of turns of an insulating foil. All these techniques must guarantee a controlled dimensioning of the side air gaps 9, 10 that in turn determine the precise value of the desired inductance. However, an insulation wrapping 11 formed through fluid bed covering or lacquering is not part of the claimed invention.

According to another example which is not part of the claimed invention, the rods could be made of a mixture of polymeric material, such as an epoxy resin, mixed with a pulverized ferromagnetic material with the composition of the material being adjusted to obtain a predetermined permeability of the composite material. Nevertheless such construction, although simple and economic, has the drawback of low values of permeability and of the flux density, that would limit their use to low performance machines. Additionally, the so formed rods would be generally fragile and prone to deteriorate and to fall inside the air gap under high thermal load conditions.

## Claims

1. A PM brushless motor comprising:

   - a rotor (3) carrying a plurality of surface mounted magnets (4);
   - a stator (1) formed by a laminations stack and with partially closed slots (7), that define a circumferential air gap (13) with said rotor, said stator (1) housing polyphase windings (2) distributed in the slots formed in said stator (1); and
   - inductive elements to modify the parasitic inductance of the motor;
   each of said slots (7) comprising a partially closed portion or bottleneck (12), which has a width smaller than that of the remaining slot and located in a radially inner position in respect of said winding (2) and extending up to said circumferential air gap (13) between stator (1) and rotor (3), and housing an inductive element (8) as long as said armature lamination stack of the motor; said inductive element (8) being located inside the stator slot (7) between said polyphase winding and said partially closed portion (12) and comprises an elongated member or rod of a material with ferromagnetic properties;
   the brushless motor being **characterized in that** said material has low specific losses at high frequency, which is comprised between 2 kHz and 16 kHz, and **in that** an insulating wrapping (11) surrounds said elongated member or rod for insulating it from said stator stack (1), with the thickness of said insulating wrapping (11) further acting as a spacer, said elongated member or rod including a stack of silicon steel laminations (21) joined together through connection, interlocking, gluing or clinching to form a substantially parallelepiped element with the laminations stacked parallel to said air gap (13), the width of the lamination stack being smaller than that of said slots (7) so as to form side air gaps (9, 10).

2. A brushless motor according to claim 1, **characterized in that** the sum of the inductances of the inductive elements (8) located in the motor slots of a phase is equal to the critical inductance

$$Lcr = Ke^*2/(In^*Pn)$$

where Ke = motor back EMF (volt/rad/sec),
Pn = number of motor poles,
In = nominal motor current.

3. A brushless motor according to claim 1 or 2, **characterized in that** each lamination of said stack of silicon steel laminations (21) has a thickness comprised between 0.2 and 0.35 mm.

4. A brushless motor according to any of the preceding claims, **characterized in that** said insulating wrapping (11) is formed through insertion of the lamination stack in a heat-shrinkable tubular element.

## Patentansprüche

1. Bürstenloser Permanentmotormagnet umfassend:

   - einen Rotor (3), der eine Vielzahl von an der Oberfläche montierte Magnete (4) trägt;
   - einen Stator (1), der durch einen Lamellenstapel gebildet ist mit teilweise geschlossenen Schlitzen (7), die einen umlaufenden Luftschlitz (13) mit dem Rotor definieren, wobei in dem Stator (1) mehrphasige Spulen (2) untergebracht sind, die in den Schlitzen, die in dem Stator (1) gebildet sind, verteilt sind; und
   - Leitelemente, um die parasitäre Leitfähigkeit des Motors zu ändern;
   wobei jeder der Schlitze (7) einen teilweise geschlossenen Abschnitt oder Flaschenhals (12) umfasst, der einen Breite hat, die kleiner ist als die des übrigen Schlitzes und sich in einer radial inneren Position bezogen auf die Spule (2) befindet und sich bis zum umlaufenden Luftschlitz (13) zwischen dem Stator (1) und dem Rotor (3) nach oben erstreckt, und ein Leitelement (8) so lange wie der Ankerlamellenstapel des Motors untergebracht ist; wobei sich das Leitelement (8) im Inneren des Statorschlitzes (7) zwischen der mehrphasigen Spule und dem teilweise geschlossenen Abschnitt (12) befindet und ein Längselement oder eine Stange aus einem Material mit ferromagnetischen Eigenschaften umfasst;

wobei der bürstenlose Motor **dadurch gekennzeichnet ist, dass** das Material niedrige spezifische Verluste bei einer hohen Frequenz hat, welche zwischen 2 kHz und 16 kHz liegt, und dadurch, dass eine isolierende Hülle (11) das Längselement oder die Stange umgibt, um es vom Statorstapel (1) zu isolieren, wobei die Dicke der isolierenden Hülle (11) des Weiteren als Abstandsmittel fungiert, wobei das Längselement oder die Stange einen Stapel Siliziumstahllamellen (21) enthält, die miteinander durch Verbindung, Verriegelung, Verklebung oder Anhaftung verbunden sind, um ein im Wesentlichen parallelflaches Element mit den Lamellen, die parallel zum Luftschlitz (13) gestapelt sind, zu bilden, wobei die Breite des Lamellenstapels kleiner ist als die der Schlitze (7), um seitliche Luftschlitze (9, 10) zu bilden.

**2.** Bürstenloser Motor nach Anspruch 1, **dadurch gekennzeichnet, dass** die Menge der Induktivitäten der Leitelemente (8), die sich in den Motorschlitzen einer Phase befinden, der kritischen Induktivität

$$Lcr = Ke*2/(In*Pn)$$

entsprechen, wobei Ke = Motor Back EMK (volt/rad/sec)
Pn = Anzahl der Motorpole,
In = nominale Motorspannung.

**3.** Bürstenloser Motor nach Anspruch 1 oder 2, **dadurch gekennzeichnet, dass** jede Lamelle des Stapels Siliziumstahllamellen (21) eine Dicke zwischen 0,2 und 0,35 mm hat.

**4.** Bürstenloser Motor nach einem der vorhergehenden Ansprüche, **dadurch gekennzeichnet, dass** die isolierende Hülle (11) gebildet wird, indem der Lamellenstapel in ein durch Hitze schrumpfbares Rohrlement eingesetzt wird.

**Revendications**

**1.** Moteur PM sans balais comprenant :

- un rotor (3) portant une pluralité d'aimants montés en surface (4) ;
- un stator (1) formé par une pile de stratifications et comportant des fentes partiellement fermées (7), définissant un entrefer circonférentiel (13) avec ledit rotor, ledit stator (1) logeant des enroulements polyphasés (2) répartis dans les fentes formées dans ledit stator (1) ; et
- des éléments inductifs pour modifier l'inductance parasite du moteur ;

chacune desdites fentes (7) comprenant une partie partiellement fermée ou un goulot d'étranglement (12), qui a une largeur inférieure à celle de la fente restante et située dans une position radialement intérieure par rapport audit enroulement (2) et s'étendant jusqu'audit entrefer circonférentiel (13) entre le stator (1) et le rotor (3), et logeant un élément inductif (8) aussi long que ladite armature de pile de stratification du moteur ; ledit élément inductif (8) étant situé à l'intérieur de la fente de stator (7) entre ledit enroulement polyphasé et ladite partie partiellement fermée (12) et comprend un élément allongé ou tige en matériau à propriétés ferromagnétiques ;

le moteur sans balais étant **caractérisé en ce que** ledit matériau présente de faibles pertes spécifiques à haute fréquence, laquelle est comprise entre 2 kHz et 16 kHz, et **en ce qu'**un emballage isolant (11) entoure ledit élément allongé ou tige pour l'isoler de ladite pile de stator (1), avec l'épaisseur dudit emballage isolant (11) servant en outre d'entretoise, ledit élément allongé ou tige comprenant un empilement de tôles d'acier au silicium (21) réunies par connexion, emboîtement, collage ou pincement pour former un élément sensiblement parallélépipédique avec les stratifications empilées parallèlement audit entrefer (13), la largeur de l'empilement de stratification étant inférieure à celle desdites fentes (7) de manière à former des entrefers latéraux (9, 10).

**2.** Moteur sans balais selon la revendication 1, **caractérisé en ce que** la somme des inductances des éléments inductifs (8) situés dans les fentes du moteur d'une phase est égale à l'inductance critique

$$Lcr=Ke*2/(In*Pn)$$

où Ke = moteur arrière EMF (volt/rad/sec),
Pn = nombre de pôles du moteur,
In = courant moteur nominal.

**3.** Moteur sans balais selon la revendication 1 ou 2, **caractérisé en ce que** chaque stratification dudit empilement de tôles d'acier au silicium (21) a une épaisseur comprise entre 0.2 et 0.35 mm.

**4.** Moteur sans balais selon l'une quelconque des revendications précédentes, **caractérisé en ce que** ledit emballage isolant (11) est formé par insertion de la pile de stratification dans un élément tubulaire

**EP 2 597 758 B1**

thermorétractable.

**FIG. 1**

FIG.2

FIG.3

8

11

21

**FIG. 4**

POWER

DRIVE

INDUCTOR

SERVO MOTOR

**REFERENCES CITED IN THE DESCRIPTION**

**Patent documents cited in the description**

- JP 61177143 A
- DE 2015978
- JP 58019138 A
- DE 3326396
- US 7436098 B2
- US 5793179 A

**Non-patent literature cited in the description**

- **JAHNS, T.M.** Component rating requirements for wide constant power operation of interior PM synchronous machine drives. *Industry Applications Conference, 2000. Conference Record of the 2000 IEEEs,* 2000, vol. 3, 1697-1704